# EUROPEAN PATENT APPLICATION

(11) **EP 4 050 941 A1**
(43) Date of publication of application: **31.08.2022**
(21) Application number: 21159745.5
(22) Date of filing: 26.02.2021
(51) Int. Cl.: H04W 48/14

(54) **ACCESS REGULATION FOR REDUCED CAPABILITY DEVICE**

(71) Applicant: THALES DIS AIS DEUTSCHLAND GMBH, 81541 München (DE)
(72) Inventor: BREUER, Volker, 16727 BOETZOW (DE)
(74) Representative: Thomas, Christine Marie Catherine

(57) **Abstract**

The present invention relates to a method to regulate access of a device of reduced capability type, designated as reduced capability device (RCD), having specific hardware and configuration characteristics and adapted to connect, via an operator, to a new radio communication network comprising several tracking areas having cells (TAC1) on different frequency bands (f1,f2).

According to the invention, the access regulation is managed by the reduced capability device (RCD) itself after determination of access restrictions on the basis of prerequisites in terms of hardware and configuration characteristics, frequency ranges (f1,f2) present in this tracking area and services requested received from the tracking area cell (TAC1) during an access routine.

## Description

### FIELD OF THE INVENTION

The present invention relates to a method to regulate access of a reduced capability device having specific hardware and configuration characteristics and adapted to connect, via an operator, to a communication network comprising several tracking areas having cells on different frequency bands.

The invention also pertains to a reduced capability device having a specific and adapted to connect, via an operator, to a communication network comprising several tracking areas having cells.

The invention also concerns a tracking area cell of a new radio communication network operated by an operator and a specific system information block.

### BACKGROUND OF THE INVENTION

This invention concerns reduced capability devices (REDCAP-Devices) that are a new type of devices standardized for New Radio (NR) in Release 17, 3GPP. Such devices are designated as NR-REDCAP devices. NR-REDCAP devices spans for a large scale of use cases especially for those intended by machines. Smart use cases requiring mid-speed loT are potentially served in NR by NR-REDCAP devices thus comprising vending machines, telematics machines, metering machines, smart home machines, eHealth machines, alarm machines, point of sales machines... Such use cases do not require data speed as no rich media and content are processed. They also do not require low latency and reliability as they are not mission critical. And they also do not specifically require energy efficiency as they need to process substantial quantities of data.

The NR-REDCAP devices will support partially the functionalities and configurations of NR-eMBB devices meaning that data speed could be at stake. Thus, during creation of the NR-REDCAP devices class to support smart loT use cases with cloud interaction and management needs, it became apparent that especially operators are concerned on such devices as without regulation and no limit to their access, the network capacities could rapidly be overwhelmed.

Operators aimed for an access restriction based on NR-RECAP device indication in message 1 or 3 during initial access. This solution is efficient but does not permit any access adjustments nor access regulation.

It is here noted that, so far, i.e. in LTE, the device categories span from LTE Cat-1bis, Cat-1, Cat-3, Cat-4 to Cat-6... for such use cases and scenarios.

Also, further network overloading problems will arise due to the low capabilities of such devices. More specifically, NR-REDCAP devices shall support only 2 reception (RX) antennas where a normal NR device supports 4 RX antennas, especially in the 3.5GHz band. There is even a further request from device/handset manufacturers that for wearables in low frequency range, i.e. <2Ghz, NR-REDCAP devices should only support one RX antenna due to the small device size and dual antenna only provides gain if the antennas are separated more than half a wavelength which cannot be ensured.

The request to support only one antenna is also requested for bands where NR-REDCAP normally supports four antennas, i..e. in the 3,5GHZ range and in the FDD bands above 2GHz. To achieve the corresponding throughput, a bandwidth support of 40MHz, compared to 20MHz, is proposed for those devices. However, such hardware and configurations are challenging for operators. There is here consequently an even more important need to limit access of the NR-REDCAP devices to the network.

Indeed, above listed hardware deviations for NR-REDCAP devices, i.e. supporting in certain frequency bands only one antenna instead of two but at doubled bandwidth, has impact on base station scheduler and also on achievable network throughput. In fact the device throughput will remain the same due to doubled bandwidth but network allocation of those and regular devices in an efficient manner becomes more complicated. Furthermore there may be also many mode deviations for NR-REDCAP in the future.

It is already currently discussed that mandatory functionality may become mandatory or optional for NR-REDCAP with the same or a reduced configuration set and optional new radio functionality may become optional with the same or a reduced configuration range.

So it is likely that there will be more than one NR-REDCAP device, rather several, some distinguished by hardware, for example antenna number or bandwidth, others only be distinguished by software or configuration range. Smaller configuration range can also be a characteristic for restrictions in the support of certain functionality due to hardware limitations.

While considering all the use cases considered for NR-REDCAP, only from machine-perspective, while not even listing wearables, and acknowledging that these use cases are today serviced in LTE by devices mainly of the categories Cat-1,3,4, it seem more than likely that several types may be defined of NR-REDCAP devices.

However, network throughput degradations for 1 RX antenna devices may be especially expected in capacity limited scenarios. For example, in an inner city, to combine devices with 1RX, 2RX and 4RX antennas in multi-user MIMO (MU-MIMO) and spatial multiplexing, must lead to network throughput degradations. Especially single receiver devices need more bandwidth and always achieving nice allocations in the spatial domain will not be possible. Hence especially in the large NR bands around 3,5GHz devices supporting only one antenna may lead to throughput degradations.

However, in other frequency ranges, also, due to size limitation, 2 RX antennas would not bring benefit especially in low frequency bands, as there is no possibility to space antennas of minimum half wavelength.

So in these areas with capacity limitation and on the frequencies where only 1RX is supported by the device, e.g. for wearables, a network may want to avoid camping. This could be especially in the higher frequency range at 3,5GHz but also in the low frequency range at 900MHz where these frequencies are considered by the operator for other purposes, e.g. especially for indoor coverage in capacity limited areas. In coverage limited areas, camping on the low bands for providing coverage may be an option, as capacity and hence the loss due to the more complex scheduling with other devices may be negligible as capacity is not the limiting factor.

So depending on the scenario operators may want these devices to refrain from initial access to certain carriers in certain areas, also such carriers may be best in signal strength.

Furthermore, later on after initial attach, such devices may re-select to such frequency layers which in capacity limited areas should be avoided. Nevertheless completely barring these devices from the network as currently intended will also not work. However it can be doubted whether an operator would prevent new wearable device or sport tracker on such technology from accessing in general.

This leads to the point that a simple MSG1 or MSG3 rejection mechanism as considered by operators is not sufficient on its own. However, initial access routine or tracking area update are the right place for such restrictions, as longer signaling and context changes for devices which will not be tolerated in the network. It shall therefore be avoided.

Specific solutions to regulate the access of NR-REDCAP devices would accordingly be desirable in the art.

### SUMMARY OF THE INVENTION

The present invention aims reduced capability devices to receive a more distinct access and re-selection regulation.

The present invention is defined, in its broadest sense, as a method to regulate access of a device of reduced capability type, designated as reduced capability device, having specific hardware and configuration characteristics and adapted to connect, via an operator, to a new radio communication network comprising several tracking areas having cells on different frequency bands, said method comprising the steps of, during an access routine of the reduced capability device in a tracking area, for the reduced capability device:
- sending an attachment request to a target cell of the tracking area,
- receiving system information from the target cell, said system information comprising prerequisites in terms of hardware and configuration characteristics, frequency ranges present in this tracking area and services requested,
- determining access restrictions depending on:
   ∘ the prerequisites received in the system information,
   ∘ the reduced capability device's own specific hardware and configuration characteristics,
   ∘ the frequency ranges available in the tracking area,
   ∘ the services requested,
- restricting access requests and reselections according to the determined access restrictions.

The invention enables to regulate access of NR-REDCAP devices depending on their activity and hardware and configuration characteristics and to rely on the NR-REDCAP itself to manage the access restrictions, thus a regulation based on the device type identification.

With the invention, a base station on a certain frequency can regulate access of new radio reduced capability devices by indicating prerequisites for devices to access. If the device does not comply with these prerequisites, while determining access restrictions, the device itself knows that restrictions apply. These access restrictions may apply for certain bands within the network or tracking area, even bands being different compared to actual frequency band the base station is operating in or frequency bands not even supported by said base station. It means that an access can be granted while non-allowed frequency bands are indicated for said device depending on the device capabilities and the indicate pre-requisites for said frequency band in said tracking area.

A tracking area is a group of cells in which a device in idle mode performs autonomous re-selection process to the best available frequencies. Hence the invention avoids any further information exchange or rejection procedures when changing cells within said tracking area including all present and indicated frequencies. It is especially interesting if such more distinct access and re-selection regulation would be indicated/broadcasted by the base station only on demand. A tracking area is here considered not only as a group of cells but beneficially also grouped in such a way that cells within one group have similar limitations i.e. either being coverage or capacity limited so that one common set of rules to be applied according to the invention is beneficial.

With the invention, the access allowance is not indicated directly but it is evaluated by the reduced capability device against the indicated prerequisites, i.e. depending its hardware and configuration parameters. In a following access attempt the reduced capability device indicates it is an NR-REDCAP device that complies/follows to the indicated prerequisites.

In case that the device has already earlier received said access restriction information the device may also indicate in its first access attempt that it complies and will follow said access regulations where it does not comply to the indicated pre-requisites. It enables to regulate the later behavior of the reduced capability device.

That the device has received said information earlier may happen because said system information is continuously scheduled or is scheduled on demand but was activated due to a different device requesting for the scheduling of said information.

Once the prerequisite analyzed and the access restrictions determined, the reduced capability device refrains itself from re-selection to nodes gNBs, for example located on said access denied bands. Such bands are the ones where the hardware and configuration characteristics or service needs do not comply with the indicated minimum pre-requisites.

As it will be seen below, in a more advanced access regulation, also services/use cases or features requiring a certain minimum configuration can be indicated. Hence a device refrains in said area in case it does not comply from requesting said service or using said indicated feature. The invention enables to do so even when the base station gNB does not indicate directly any barring by itself. Access request according to the invention can be an access request for an initial attachment or an access request for a tracking area update.

The invention enables a new radio reduced capability type clarification during initial access of the reduced capability device by providing type parameter information/prerequisites or use case information/prerequisites via system information. Parameters will be directly specified in 3GPP, type or service clarification can also be evaluated via providing QoS classes for which reduced capability devices are allowed and hence by service differentiation distinction of the use cases.

The invention thus enables to regulate NR-REDCAP device access for certain networks or carrier frequencies, i.e. depending on support feature and parameterization set in general and especially for certain bands. While the device is identified in initial access messages, based on device performed type matching against network provided system information. Thus device's characteristics, intended use case or identity are used in the invention as identification criteria for access grant.

As it will be seen below, the device characteristics include hardware characteristics such as antenna configuration per frequency band and receiver type, for example half-duplex or full duplex, but it includes also supported configuration range for certain features.

Based on indicated device type matching in initial access, the network can always then grant or deny access for said band or redirect to other bands or decline access. However the invention prevents useless attempts to access. New cause is advantageously included in initial access and reject messages, i.e. type and/or use case matching.

As an example, surveillance cameras supporting voice and video, seldom used, may be admitted, whilst use case handset with main function video call may be rejected due to different related network impacts. Also machine fleets may be allowed but individual low end handsets will be precluded due to negative network throughput impact or restricted/re-directed related to supported functionality on a band. Typically frequency bands where the reduced capability supports only one RX antenna may be precluded especially when normal NR devices would be able to support 4 antennas and only bands where the device supports two RX may be allowed. Whilst in low frequency range where NR supports only two RX antennas mandatory, a single receiver NR-REDCAP device may be allowed in general or allowed with one functionality, typically video call, precluded.

The device characteristics are important distinction on the access evaluation especially with respect to requested services and their density. An NR-REDCAP device having hardware or feature limitations negatively impacting the network throughput for certain NR-frequencies should not make excessive use of network resources on those frequencies. Hence a handset performing video-calls often may be precluded on those frequencies in said area, whilst an alarming panel most of the time only doing keep-alive messaging and seldom video calls may be allowed to camp on said frequency also to camp on said frequency for power saving reasons.

According to a particular implementation of the invention, the access routine being a tracking area update routine of the reduced capability device triggered by a change of tracking area, by an expiration of a tracking area update timer or by a tracking area update request received from the communication network, the attachment request is a tracking area update request.

When the device changes the tracking area, it generally needs to redo the procedure of the invention, as different tracking areas may have different rules. Also, such a tracking area update routine can also be triggered by an expiration of a timer. It can also be requested by the network, for example for security reasons. According to the invention, this modified tracking area routine processes NR-REDCAP pre-requisites clarified indication. It avoids a full identification process when tracking area update is performed due to timer expiry or on request i.e. for security reasons.

According to a further feature, the tracking area update routine indicates whether a type clarification is further required.

Such a feature is useful when the tracking area update is done for security reasons or when policies on pre-requisites have changed.

According to an advantageous feature, the system information is operator dependent.

Such an advantageous feature enables the operators to have their own policy and management of the access of the reduced capability devices according to the invention. The definition of the prerequisite in the system information can be done individually per tracking area or for the entire network. The prerequisites can differ with the tracking area in terms of frequency ranges restrictions among others prerequisites. An entire frequency band can thus be precluded for the whole network by an operator and not by another one that will preclude it only for some tracking areas.

With this feature, the rules differ whether tracking area is capacity or coverage limited but operators may bar certain frequencies entirely.

Also advantageously, the system information is tracking area dependent.

According to an advantageous feature, the attachment request during the access routine signals the reduced capability type for the reduced capability device.

Such a feature enables the target cell to reject the attachment request and to trigger the sending of the operator specific system information. The system information can also be sent by default with any rejection of an access request whatever is the device but such a by default sending can negatively impact the network without any added value. Here negatively impacting means that system information on demand provisioning is one of the lean carrier concepts to avoid to reduce information provisioning especially in low traffic hours to a minimum and allow for base station power saving. The on-demand signaling of the reduced capability type system information is thus advantageous.

According to the invention, advantageously, cell-reselection performed by the reduced capability device to an inter-frequency cell in said tracking area, after determination of the access restrictions for this tracking area, is conducted according to determined access restrictions.

This is beneficial as otherwise, when only restrictions per frequency would be provided, the method of the invention would need to be repeated when changing frequency.

This feature enables to regulate also the later behavior of the reduced capability device while trying to reselect at another cell. It means that the device can further perform user device autonomous cell re-selections in the tracking area without any further network communication, which also saves network resources.

According to a specific feature of the invention, specific hardware and configuration characteristics being a single antenna implementation or half-duplex implementation for at least a given range of frequency, the prerequisites exclude such an hardware and configuration characteristics for at least one available range of frequency, the determined access restrictions thus preventing any access request or later re-selection of the reduced capability device in said available range of frequency.

This feature enables to deal with the specific situation where a single antenna is available on board a device, for example for size reason. The invention enables such reduced capability device to prevent themselves to try to connect in tracking areas where the network resources are at stake.

According to an advantageous implementation of the invention, specific hardware and configuration characteristics of an NR-REDCAP device being a N multi-antenna implementation device for at least a given range of frequencies, where for normal devices M is a mandatory number of antennas, and N being such that N<M/2, the prerequisites exclude such an hardware and configuration characteristics for at least one available range of frequency, the determined access restrictions thus preventing any access request or later reselection of the reduced capability device in said available range of frequency.

This implementation enables to preclude NR-REDCAP devices for frequency range two as defined in the standard if they have less than half of the number of mandatory antennas while NR-REDCAP type of devices is not precluded in this range of frequencies FR2.

According to a specific feature, prerequisites exclude services among the followings: non-real-time services, data services, no-voice services, seldom voice services, seldom video services, healthcare services, POS services, services classified by a standardized 5QI table as specified in a 3GPP Standard.

This feature enables to allow services/use cases where mid-speed will be enough to manage a correct quality of the service but to exclude other real-time services which would be too network resources demanding. There is always the possibility for the device then to rely on lower releases of the standard, i.e. on 4G available capabilities.

According to another specific feature, prerequisites include QoS class below one QoS class as specified in a 3GPP Standard.

This feature enables to limit the access for services that requires a QoS above a given QoS class, and thus to limit the access grant to services that do not require too high quality of communication especially real-time services. This can be used to limit access for certain use cases where several level QoS can apply, such services, like video-call for example, that would be otherwise authorized or forbidden.

According to another specific feature, prerequisites exclude slices/applications to which the service is to be allocated.

Such a feature enables to select slices/applications. The invention thus enables to prevent devices acting in certain slices to request access while other slices are authorized to do so.

Of course it is here noted that anyone of the combination of the above mentioned features can be introduced in the prerequisites in order to select accurately the service, the hardware and configuration characteristics of the devices, the range of frequency for each device depending on its characteristics and activities/use cases.

According to an advantageous implementation, the access routine being an initial routine and the reduced capability device being Rel.17 compliant, the messages msg1 and msg3 are used for the steps of the method in the initial access routine.

The use of these standardized messages is advantageous as they are anyhow exchanged with the target cell. The invention can thus start to be implemented in a straightforward way and without requiring modification of the first attachment routine. The msg1 and msg3 messages are suitable to start the more distinct process for activating scheduling of the detailed access regulations or to generally bar such devices which is believed to be none-beneficial.

The present invention also relates to a reduced capability device having specific hardware and configuration characteristics and adapted to connect, via an operator, to a communication network comprising several tracking areas having cells, said reduced capability device being adapted to, during access routine of the reduced capability device in a tracking area:
- sending an attachment request to a target cell of the tracking area,
- receiving an operator dependent system information from the target cell, said system information comprising prerequisites in terms of hardware and configuration characteristics, frequency present in this tracking area and services requested,
- determining access restrictions depending on:
   ∘ the prerequisites received in the system information,
   ∘ the reduced capability device's own specific hardware and configuration characteristics,
   ∘ the frequency ranges available in the tracking area,
   ∘ the services expected in this tracking area,
- restricting access requests according to the determined access restrictions.

Such a device implements the method of the invention in collaboration with any target cell having system information blocks to give any reduced capability device the prerequisites for access restrictions to be determined by the reduced capability device and to be applied by itself in order for the network not to be overloaded by access requests from such reduced capability devices.

The invention also relates to a tracking area cell of a new radio communication network operated by an operator, said tracking area cell having operator dependent system information blocks comprising prerequisites in terms of hardware and configuration characteristics, frequency present in this tracking area and services requested, said system information being to be sent, after reception of an attachment request from a reduced capability device, during access routine of the reduced capability device with the tracking area cell, to regulate access of reduced capability devices having specific hardware and configuration characteristics and adapted to connect to the tracking area cell, said access regulation being managed by the reduced capability device by determining access restrictions based on the prerequisites in the sent system information, on the reduced capability device's own specific hardware and configuration characteristics, on the frequency ranges available in the tracking area, on the services expected in this tracking area.

A tracking area cell is a cell providing said access information being valid for all frequencies within said tracking area, also for frequencies not being supported by said cell but deployed for said technology in the tracking area.

Such a tracking area cell is necessary for the reduced capability device of the invention to be able to implement the invention. It is original because it possesses or is able to build system information including the prerequisites as needed by the reduced capability device to determine access restrictions.

As indicated the prerequisites are not necessarily the same for all tracking areas, hence the clarification process needs also to be performed when the device changes the tracking area, i.e. enters in a new tracking area and performs a tracking area update. However, it is also known that e.g. static devices need to perform another TAU update often related to security reasons. Also, general devices may need to perform a tracking area update procedure after timer expiry or initiated by the network for validation whether the device is still there. In these cases, when TAU update is performed due to expiry of an update timer or for any other reason in the same tracking area and the access regulation information was not modified the device can perform a TAU update procedure with cause NR-REDCAP device type clarified. It enables to avoid the unnecessary stipulation of said clarification process and waist signaling resources.

However, the network has also the option at any time to send a tracking area update request to an NR-REDCAP device for type clarification especially upon access restriction change. It is also possible that, when the device sends a TAU update request, typically after a longer sleep period or expiration of TAU update timer with NR-REDCAP type clarified, the network may reject said TAU update request and indicate type clarification needed. In this case the network activates a system information block scheduling and the low capability devices perform the outlined routine.

At last the invention relates to an operator dependent system information block comprising prerequisites in terms of hardware and configuration characteristics, frequency present in this tracking area and services requested, said system information being managed in a tracking area cell of a new radio communication network operated by an operator, said system information block being further to be sent, after reception of an attachment request from a reduced capability device, during access routine of the reduced capability device with the tracking area cell, to regulate access of the reduced capability device having, on its side, specific hardware and configuration characteristics and adapted to connect to the tracking area cell, said access regulation being managed by the reduced capability device itself by determining access restrictions based on the prerequisites in the system information, on the reduced capability device's own specific hardware and configuration characteristics, on the frequency ranges available in the tracking area, on the services expected in this tracking area.

Such an original system information block is the essential messenger for the invention to take place. It includes prerequisites necessary for the reduced capability device to determine access restrictions.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
• Figure 1 represents a flow chart for an initial access routine of a reduced capability device of the invention;
Figure 2 shows a flowchart for a specific service request from a reduced capability device of the invention where the service is redirect to LTE service;
• Figure 3 shows a flowchart of a reselection case as performed by a reduced capability device of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

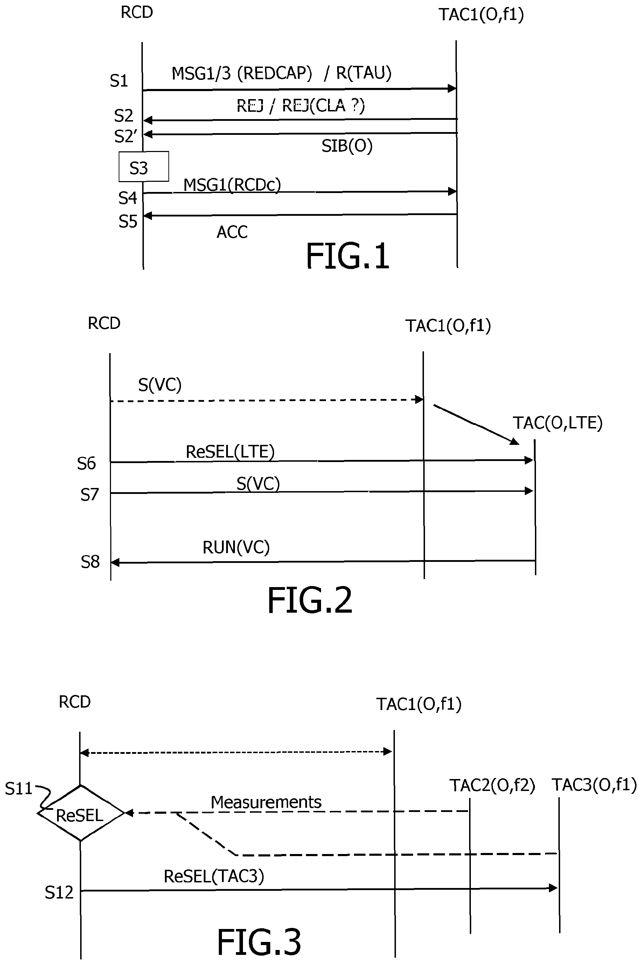

Figure 1 schematically shows a flowchart of an initial access routine as performed with a reduced capability device RCD of the invention. In this example, the REDCAP device can use two RX antennas on a first frequency band f1 and a single antenna on a second frequency band f2. It is here noted that the frequency ranges f1 and f2 designate two given ranges of frequencies, not the frequency bands f1 and f2 as defined in the standard in NR. The hardware characteristics is thus such that two antennas are implemented but, for one frequency the configuration characteristics of the device is such that only one antenna can be used for one of the given range of frequency. The invention thus relates to hardware and configuration characteristics of the device for restrictions to be determined and applied.

In a first step S1, the device RCD starts an attach procedure with a cell TAC1 of a tracking area, in which the device is present, by sending standardized messages, typically message 1 and 3 MSG1/3(REDCAP) or a request for a tracking area update R(TAU). Here the device RCD indicates in the MSG1/3 that it is of the reduced capability type REDCAP but, for example, it does not indicate the REDCAP type for the TAU request R(TAU).

The cell TAC1 works with an operator O and have a frequency band f1. In a second step S2, the attach request is rejected REJ by the cell TAC1. This rejection can be done with or without a clarification request CLA regarding a type of the reduced capability to be reap by the cell TCA1. This step S2 is standardized and aims in a cell centralized control of the attachment. It is not a part of the invention. It is to be executed when no type identification or type compliance indication was provided in the initial first attach.

According to the invention, an additional step S2' is performed where the cell TAC1 sends a system information block SIB(O). Here, in the example, the system information block SIB(O) is dependent on the operator (O) having received the request. It can also be that several operators or all the operator share at least a part of the system information according to the invention. It is also noted here that the system information according to the invention are also advantageously dependent on the tracking area, defining distinct prerequisite depending on the tracking area, even if for the same operator. As the system information to be provided to the reduced capability devices can also change as a function of the time, the granularity of the system information of the invention is thus defined according to the operator, the tracking area and the time.

This system information comprises prerequisites that are required by the operator O to authorize attachment of the reduced capability device RCD in the tracking area, to which the cell TAC1 belongs.

The system information is typically a bit map comprising the reduced capability type NR-REDCAP and afterwards 8 or a certain number of bits indicating compliant or non-compliant to each of cases that can be encountered.

For example, the prerequisites stipulate that a 2RX antenna hardware characteristic is required on two ranges of frequency F1 and F2 in this tracking area. It also stipulates that services requiring a quality of service larger the quality of service class X is not allowed, typically no video allowed on all frequency ranges or other real time services requiring similar high throughput.

Then in a step S3, the device RCD determines access restrictions depending on the prerequisites, its own specific hardware and configuration characteristics, frequency ranges available in the tracking area and services that may be concerned by the attachment if ever.

The access restrictions are thus used to restrict next access requests or cell re-selections. The invention relies on the reduced capability device to apply the restrictions. It means that the network is freed from managing un-useful and bandwidth demanding requests that will anyhow be refused by any cells in this tracking area.

The invention enables to regulate the reduced capability devices connections after they request attachment but also enables to later network behavior of such devices which will save a lot of resources.

Then the reduced capability device RCD can send that it is compliant with the prerequisites in next access attempt and the network can always grant or deny access. More simply, if the reduced capability device complies to one of the following prerequisites it does an access reattempt otherwise not.

It is here noted that the determination of the operator dependent system information can change as a function of time meaning that reduced capability devices could be allowed to freely attach on certain periods of the day.

Depending on the area traffic demands and thus capacity needs may be high during certain times, i.e. in an industry park there may be high traffic from 6.00-18.00 but low traffic in the night, hence vending machines and other devices could provide their reports or machines their accumulated data thereafter.

In the example, the access restrictions as determined at the device RCD side do not concern the device that is compliant with the prerequisites in frequency band f1 of the cell TAC1.

In a step S4, a message1 MSG1 (RCDc) stipulating the compliance of the reduced capability device RCD is sent and the required attachment is accepted ACC in a step S5. Then the device RCD camps on the cell TAC1. With the invention, a kind of on-demand REDCAP type clarification SIB is used and the device RCD evaluates that it complies with the prerequisites as indicated for camping and attaches finally.

It is here noted that the reduced capability device does not necessarily send its reduced capability type. In such a case, the attachment request is anyhow refused and the system information SIB(O) is sent by default for processing by the device to determine the access restrictions. Upon access request of an NR-REDCAP device if it does not contain a type NR-REDCAP classification or compliant statement, NR REDCAP devices will thus be rejected to allow for type classification. This is however preferable that the type "NR-REDCAP device" is identified in MSG1/MSG3 during an initial access.

The detailed type information i.e. configuration and restrictions or service classes preferred by the device would anyway not fit into simple msg1 or msg3 exchange. Furthermore this would be restricted to a clarification related to the current frequency the device tries to attach to and not with respect to other frequencies also present in said area. It means that, after each re-selection i.e. when changing the frequency, a re-evaluation would otherwise need to be done.

Also, from this, the beneficial realization including other carriers when doing initial attach with a certain node in an area is to be clarified.

Identification can be based on a type classification against a type list provided in system information by the network. While not departing from the scope of the claims, system information for NR-REDCAP type classification could be provided on regular basis indicated in e.g. in SIB1 that would be consequently modified. With the invention the system information needs to be mandatory read by an NR-REDCAP device prior starting with access procedure.

The device indicates its type according to said classification, hence MSG1 or 3 only need to contain a few bits for that, like NR-REDCAP, type X,Y,Z, those types being to be determined by standardization among others.

As seen above, if the tracking area cell or base station only proposes the information on demand, the NR-REDCAP device can also send an attach request with device type of NR-REDCAP unknown which leads to an access reject for type clarification and activation/provisioning of the related information.

Exception which is to be considered here is if the attach request includes an indication for an emergency call, i.e. in that case registration is anyhow accepted for emergency purposes. Such an exception can be managed according to the invention with a service prerequisite stipulating that emergency services are agreed. Emergency calls should be excluded from said NR-RECAP access restrictions in general as for other devices here same rules should apply in case of emergency call. Anyhow, while processed with or without a solution under the invention, NR-REDCAP rejection or rejection due to type shall be avoided for emergency calls if the device in general can be supported by said base station. The NR-REDCAp type and behavior clarification may indicate one, or combination of the following prerequisites.

Concerning the hardware and configuration characteristics, the prerequisite can be 1RX operation in the tracking area, on at least one of the available frequency band. This prerequisite indicates a 1RX configured device about allowed connection in at least one frequency band in the tracking area or not.

It thus lists prerequisite frequency bands where to operate for 1RX operation in said tracking area or, possibly, in the entire network. This implies that any re-selection or camping attempt of a device that only supports 1RX in a not listed frequency band shall be precluded. It implies that said barring indication is not only for initial access but also for autonomous re-selection after access was granted. This is especially beneficial in areas which are capacity limited or, formulated in the opposite way, on which bands 2RX is mandatory.

For example, an operator in a city may preclude NR-REDCAP 1 RX devices from 900MHz, as the operator intends to use said frequency for deep indoor coverage. Such preclusion can also be to avoid degraded network throughput due to inefficient MU-MIMO. In dense areas such devices can sufficiently be served by 3.5GHz band. In a different tracking area, i.e. rural, 900MHz with 1RX may be granted, just to ensure coverage. Another operator may apply different policies, i.e. support of 2RX is mandatory in 3,5GHz but 1RX on 900MHz is in general allowed to ensure sufficient coverage for these devices.

Also, in case the current cell or base station is on a frequency compliant with 1RX only, 1RX device shall refrain from further connection attempts and here the SIB contains a whitelist with frequency carriers which allow 1RX operation.

Concerning the service or use case prerequisites, it lists in principle all use cases excluding cheap-phone video telephony, handsets and infotainment, i.e. non-real-time services/data services, no voice services, seldom voice and video alarming services, healthcare services, POS services.

QoS classes specified for 5G are also advantageous prerequisites according to the invention in terms of services. For example the use of following 5G QoS classes may be allowed/not allowed for NR-REDCAP devices on this band or this tracking area or this network PLMN.

With the invention, a reduced capability device RCD can access but it is not allowed to request for a service not being allowed for said device type on this cell or area. It thus needs to take a lower QoS class which could be allowed. With such feature, it is possible to make that, both real-time, video call is not allowed but voice call is allowed, which is a difference in QoS class but different in throughput.

Also, with respect to video calls, there may be differences concerning maximum allowed throughput if allowed at all, i.e. no high resolution/ 4k video call. 3GPP provides in TS23.501 specification of certain QoS classes especially in table 5.7.4-1: standardized 5QI to QoS characteristics mapping, i.e. service which have certain QoS classes which are frequently to be used and hence ease the signaling accordingly.

5QI1 is, GBR conversational voice which could be allowed, 5QI2 is conversational video or live streaming which could be forbidden for such devices. When using said specified 5QI table or any other table containing 5G QoS mapping services allowed could be reflected and indicated by a simple bitmask.

Prerequisite in terms of services can also be a certain fleet/owner based on an application information. It enables that devices belonging to a certain slices is allowed to access even with 1RX hardware characteristics. For example, for automotive, a slice of a car-manufacturer is allowed for car build in systems. It is however here noted that vehicular mounted devices, currently not considered for NR-REDCAP, are known to have higher antenna efficiency, hence also, as eMBB devices, they need less antennas. So access can be allowed without harming the network efficiency for vehicular mounted REDCAP devices, including trains. Thus in general devices with 1 antenna can be allowed with the invention with a prerequisite of having an antenna that exceeds normal antenna gain by 3dBi. Thus, with the invention, the prerequisites can include a minimum configuration to be supported for a certain functionality.

For example, some reduced capability devices may support, in new radio, a certain functionality, thus service defined in prerequisite, mandatory or optional with the same or smaller configuration as normal other new radio reduced capability devices. Different devices may have different ranges, and hence here the operator may indicate the prerequisite/range to use said functionality. The reduced capability device answers to the operator specific system information received from the target cell for example by requesting a service while stipulating that it is compliant with the prerequisites. This answer can also be made later on while requesting a service.

From above list indication on 2RX mandated bands, QoS (quality of service) classes allowed up to or forbidden, possibly only for certain slices, is very practical way for the device to monitor its access requests while applying the determined restrictions. With the invention, the device can always make an access request but it can above all prevent itself to do so while applying itself the access restrictions that must be applied to its specific configurations, its needed services or the available frequency bands. While indicating to the cell that it is compliant with prerequisites, the device will have a granted access or not but would not have overloaded the network with attempts to access.

Moreover, the new radio reduced capability system information according to the invention clarification can contain only few values indicating "type is supported at least with x criteria". In this case, "type above highest criteria" could be a valid answer. In case classification was not achieved, also special treatment may be needed.

On figure 2 is exposed a further situation of the reduced capability of the invention as attached to the cell TAC1 of figure 1. In this exemplary situation, the device would normally require directly at the cell TAC1 a service of voice call S(VC). This is illustrated by a dashed arrow on figure 2.

With the invention, such a request for service does not occur and the device will make a reselection ReSEL in a step S6. Here, as tracking area exclude any sufficient quality of service for a voice call in new radio, the device make reselection ReSEL(LTE) to an LTE cell TAC(O,LTE) of the same operator O or of another operator in case national roaming, i.e. multi-operator support is supported. Then in a step S7, the service S(VC) is required and the service is granted and the video call started RUN(VC) in a step S8. After the call the device RCD can stay on LTE or reselect to new radio.

Besides the device autonomous activity for setting up the service, also situation may occur, where the device has an allowed service ongoing and the user would like to start another service which is not allowed on said carrier. In such situation a network interaction/assistance would be needed not to abort the ongoing service.

Thus with the invention, while an allowed service is still running, a service setup request for a forbidden service may be started, which can either be granted or results in a handover/re-direction done by the network. In such a way it is ensured that service continuity is achieved. It means that the network can serve the device on any carrier if it decides to do so, regardless of the device compliance to the pre-requisites. If no service is running, the NR-REDCAP device will change network/carrier prior starting said service autonomously.

Figure 3 illustrates another situation where the connection of the device RCD with the currently used cell TAC1 becomes bad illustrated by a dotted line. In such a situation, the device RCD classically starts measurements for reselection ReSEL, these measurements being illustrated as long dashed line. Two cells are present in the example for the operator O: a first TAC2(O,F2) on a second range of frequency F2 and a second TAC3(O,F1) on the first range of frequency F1.

While consulting the access restrictions as internally determined by the device RCD, the device RCD knows than the second range of frequency F2 is not allowed. It will thus then perform the reselection ReSEL(TAC3) with the second cell TAC3(O,F1) working on the first range of frequency F1.

In the example of figure 3, the second cell TAC3 belongs to the same tracking area and thus the reselection is done directly without previous verifications of the compliance of the device RCD.

However, if ever the cell TAC3 would belong to another tracking area, the method of access regulation of the invention would be performed again as shown on figure 1.

It needs to be noted that the evaluation of cell TAC2 could either be in general discarded i.e. not even perform the measurements as the device knows not being compliant to the rules for said frequency. Alternatively it may measure said cell, confirm that it belongs to the same TAC and discard it at that time.

Thus, with the invention when a NR-REDCAP device RCD is moving, cells are evaluated for re-selection according to the determined NR-REDCAP restrictions from the initial latest serving cell. The device anyhow refrains itself from re-selecting or considering frequency band F2 as it does not comply to the determined restrictions when still being in same tracking area cell or restriction was indicated for entire band. However, in later case, if a general prerequisite would be indicated for the network, the device would refrain from scanning and considering said frequency.

In particular, in such case, the re-selection procedure discards frequency where the device does not comply. Said frequency is advantageously directly excluded from re-selection process. In case it is clear that the reselection cell belongs to same tracking area, the frequency is directly excluded. If the reselection cell is potentially from a different tracking area, the device can measure, check the tracking area and to refrain from access or reselection if it is the same tracking area.

In a further embodiment, it is also considered that due to the device mobility a handover may fail and hence the device gets into a situation of network failure. To ensure fast service continuity a device in that case may attach to anyone being detectable and judged suitable regardless of the pre-requisites for said band. The device in that situation should indicate radio-link-failure, its earlier used identifier and also the identifier of the previous connected base station and indicate device type NR-REDCAP complaint or non-compliant.

The network then decides on how to further proceed for such a case. For example it services the device exceptionally to achieve service continuity but performs handover or network assisted cell change as soon as possible to be again in a resource efficient state. This clearly indicates that, according to exceptions for cases where a device has an ongoing service or wants to resume a service, the pre-requisites may be momentarily discarded for service continuity, but in these cases the network is anyway in connection control and may resend the device to any other frequency.

With the invention a cheap-handset can be refrain from access and will be sent to other frequency, whilst alarming panel is allowed to camp. Depending on device/application type and expected use case, for example the network can indicate video call only seldom. Also with the invention, single RX in 3,5GHz handsets can be forbidden because of video calls being popular service. However alarming panels with video will be allowed using seldom said functionality.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims.

## Claims

1. Method to regulate access of a device of reduced capability type, designated as reduced capability device (RCD), having specific hardware and configuration characteristics and adapted to connect, via an operator (O), to a new radio communication network comprising several tracking areas having cells (TAC) on different frequency bands (f1, f2), said method comprising the steps of, during an access routine of the reduced capability device (RCD) in a tracking area, for the reduced capability device (RCD):
- sending (S1) an attachment request (MSG1/3 or R(TAU)) to a target cell (TAC1) of the tracking area,
- receiving (S2') system information (SIB) from the target cell (TAC1), said system information (SIB) comprising prerequisites in terms of hardware and configuration characteristics, frequency ranges (f1, f2) present in this tracking area and services requested,
- determining (S3) access restrictions depending on:
∘ the prerequisites received in the system information (SIB),
∘ the reduced capability device's own specific hardware and configuration characteristics,
∘ the frequency ranges (f1,f2) available in the tracking area,
∘ the services requested,
- restricting (S4) access requests (MSG1(RDCc)) and reselections according to the determined access restrictions.

2. Method according to claim 1, wherein, the access routine being a tracking area update routine of the reduced capability device (RCD) triggered by a change of tracking area, by an expiration of a tracking area update timer or by a tracking area update request received from the communication network, the attachment request is a tracking area update request (R(TAU)).

3. Method according to claim 2, wherein the tracking area update routine indicates whether a clarification (CLA?) is further required.

4. Method according to claim 1, wherein the system information (SIB(O)) is operator dependent.

5. Method according to claim 1, wherein the system information (SIB) is tracking area dependent.

6. Method according to claim 1, wherein the attachment request (MSG1/3(REDCAP)) during the initial access routine signals the reduced capability type for the reduced capability device (RCD).

7. Method according to one of preceding claims, wherein cell re-selection (ReSEL) performed by the reduced capability device (RCD) to an inter-frequency cell in said tracking area, after determination of the access restrictions for this tracking area, is conducted in accordance to the determined access restrictions for said tracking area.

8. Method according to one of preceding claims, wherein, specific hardware and configuration characteristics being a single antenna implementation or half-duplex implementation for at least a given range of frequency, the prerequisites exclude such an hardware and configuration characteristics for at least one available range of frequency (f1,f2), the determined access restrictions thus preventing any access request or later cell re-selection of the reduced capability device in said available range of frequency.

9. Method according to one of preceding claims, wherein, specific hardware and configuration characteristics of an NR REDCAP device being a N multi-antenna implementation device for at least a given range of frequencies, where for normal devices M is a mandatory number of antennas, and N being such that N<M/2, the prerequisites exclude such an hardware and configuration characteristics for at least one available range of frequency, the determined access restrictions thus preventing any access request or later reselection of the reduced capability device (RCD) in said available range of frequency.

10. Method according to one of preceding claims, wherein prerequisites include services among the followings: non-real-time services, data services, no-voice services, seldom voice services, seldom video services, healthcare services, POS services, services classified by a 5QI table as specified in a 3GPP Standard.

11. Method according to one of preceding claims, wherein prerequisites include QoS class below one QoS class as specified in a 3GPP Standard.

12. Method according to one of the preceding claims, wherein prerequisites include slices/applications to which the service is to be allocated.

13. Method according to one of the preceding claims, wherein, the access routine being an initial routine and the reduced capability device being Rel.17 compliant, the messages msg1 and msg3 are used for the steps of the method in the initial access routine.

14. Reduced capability device (RCD) having specific hardware and configuration characteristics and adapted to connect, via an operator (O), to a communication network comprising several tracking areas having cells (TAC), said reduced capability device (RCD) being adapted to, during access routine of the reduced capability device (RCD) in a tracking area:
- sending (S1) an attachment request (MSG1/3 or R(TAU)) to a target cell (TAC1) of the tracking area,
- receiving (S2') system information (SIB) from the target cell (TAC1), said system information (SIB) comprising prerequisites in terms of hardware and configuration characteristics, frequency ranges (f1,f2) present in this tracking area and services requested,
- determining (S3) access restrictions depending on:
∘ the prerequisites received in the system information (SIB),
∘ the reduced capability device's own specific hardware and configuration characteristics,
∘ the frequency ranges (f1,f2) available in the tracking area,
∘ the services requested,
- restricting (S4) access requests (MSG1(RDCc)) and reselections according to the determined access restrictions.

15. Tracking area cell (TAC1) of a new radio communication network operated by an operator (O), said tracking area cell (TAC1) having system information (SIB) comprising prerequisites in terms of hardware and configuration characteristics, frequency ranges (f1,f2) present in this tracking area and services requested, said system information (SIB) being to be sent, after reception of an attachment request (MSG1/3 or R(TAU)) from a reduced capability device (RCD), during access routine of the reduced capability device (RCD) with the tracking area cell (TAC), to regulate access of reduced capability devices having specific hardware and configuration characteristics and adapted to connect to the tracking area cell (TAC), said access regulation being managed by the reduced capability device (RCD) by determining access restrictions based on the prerequisites in the sent system information (SIB), on the reduced capability device's own specific hardware and configuration characteristics, on the frequency ranges (f1,f2) available in the tracking area, on the services requested.

16. System information block (SIB) comprising prerequisites in terms of hardware and configuration characteristics, frequency ranges (f1,f2) present in this tracking area and services requested, said system information block (SIB) being managed in a tracking area cell (TAC1) of a new radio communication network operated by an operator (O), said system information block (SIB) being further to be sent, after reception of an attachment request (MSG1/3 or R(TAU)) from a reduced capability device (RCD), during access routine of the reduced capability device (RCD) with the tracking area cell (TAC1), to regulate access of the reduced capability device (RCD) having, on its side, specific hardware and configuration characteristics and adapted to connect to the tracking area cell (TAC1), said access regulation being managed by the reduced capability device (RCD) itself by determining access restrictions based on the prerequisites in the system information block (SIB), on the reduced capability device's own specific hardware and configuration characteristics, on the frequency ranges (f1,f2) available in the tracking area, on the services requested.
